# EUROPÄISCHE PATENTANMELDUNG

(11) **EP 1 408 065 A1**
(43) Veröffentlichungstag der Anmeldung: **14.04.2004**
(21) Anmeldenummer: 03022328.3
(22) Anmeldetag: 04.10.2003
(51) Int. Cl.: C08G 63/90

(54) **Formgebung und Wäsche gelbildender Biopolymere**

(30) Priorität: 09.10.2002 DE 10247157
(71) Anmelder: MESSO-CHEMIETECHNIK GMBH, 47229 Duisburg (DE)
(72) Erfinder: Hinsen, Wilhelm, 40878 Ratingen (DE); Hofmann, Günter, 47259 Duisburg (DE)
(74) Vertreter: Stenger, Watzke & Ring Patentanwälte

(57) **Zusammenfassung**

Die vorliegende Erfindung betrifft Verfahren zur Reinigung eines Biopolymers, welches nach einer weitgehenden Entfernung des zur Extraktion aus einer Biomasse genutzten organischen Lösungsmittels mittels einer Wasserdampfdestillation als Granulen vorliegt. Durch das neuartige Reinigungsverfahren sollen einfach, schnell und kostengünstig die in den Granulen des extrahierten Biopolymers verbliebenen Verunreinigungen sowie Lösemittelrückständen abgereichert werden, wobei dieses erfindungsgemäß dadurch erreicht wird, daß Granulen mit einem Gehalt von kleiner 25 Gew.-% an organischem Lösungsmittel wenigstens einmal mit einer nicht beliebig mit Wasser mischbaren organischen Waschlösung derart behandelt werden, daß durch Verdrängen der wäßrigen Phase mittels der Waschlösung, die in Wasser löslichen Verunreinigungen, und durch Eluieren der in dem organischen Lösungsmittel löslichen Verunreinigungen in die Waschlösung, eine Abreicherung der Verunreinigungen in den Granulen bewirkt wird, wobei nachfolgend die wäßrige Phase separiert und die gewaschenen Granulen von der Waschlösung abgetrennt werden.

## Beschreibung

Die vorliegende Erfindung betrifft ein Verfahren zur Reinigung von Polyhydroxyalkanoaten (PHA), z. B. Polyhydroxy-β-Buttersäure (PHB), die nach einer (weitgehenden) Entfernung des zur Extraktion aus Biomasse genutzten organischen Lösungsmittels mittels einer Wasserdampfdestillation als poröse Granulen vorliegen.

In dem brasilianischen Patent PI 9302312 wird ein Verfahren beschrieben, mit dem Polyhydroxyalkanoate durch eine heiße Extraktion mit Isoamylalkohol aus Biomasse gewonnen werden können. Diese wird zuvor durch ein geeignetes Fermentationsverfahren erzeugt und vor Aufgabe in die Extraktion weitgehend von der Fermentationsbrühe abgetrennt. Die extrahierte Biomasse wird von der heißen Extraktionslösung z. B. durch Filtration abgetrennt. Die Polyhydroxyalkanoate sind nach Kühlung der Extraktionslösung bei niedrigen Temperaturen unlöslich in dem organischen Lösungsmittel. Eine Aufkonzentrierung der Polymere z. B. durch Filtration, Zentrifugation oder ähnlicher Verfahren ist daher in gewissen Grenzen möglich. Zur vollständigen Abtrennung des Isoamylalkohols von den Polyhydroxylalkanoaten muß dieser durch die Behandlung der PHB/Lösungsmittel-Suspension z. B. mit Dampf bzw. mit siedendem Wasser entfernt werden.

Eine besonders wirtschaftliche Art der Verdampfung von nur bedingt mit Wasser mischbaren organischen Lösungsmitteln (z. B. Isoamylalkohol) mittels einer kontinuierlichen mehrstufigen Verdampfung wird im Antrag auf Erteilung eines Patentes DE 101 28 663.5 beschrieben.

Die Verdampfung des Lösungsmittels erfolgt bei einer innerhalb der Mischungslücke des Lösungsmittels mit Wasser liegenden Zusammensetzung der Flüssigphase. Das in einem organischen Lösungsmittel (z. B. IAA) suspendierte Biopolymer wird mit einer geeigneten Menge an Wasser in die Verdampfer einer mehrstufigen Eindampfanlage eingespeist. Die Verdampfer werden indirekt mit Dampf bzw. den Brüden der vorangehenden, bei höherer Siedetemperatur betriebenen Stufe beheizt. Die kondensierenden Brüden zerfallen in eine wässrige und in eine organische Phase, die jeweils mit dem anderen Lösungsmittel gesättigt sind. Die wässrige Phase wird zur Ergänzung des Wasserverlustes beim Verdanpfen vorzugsweise in die Verdampfer zurückgeführt. Das organische Kondensat steht nach Austreibung von Wasser wieder als Extraktionsmittel zur Verfügung.

Das Biopolymer bildet bei einer derartigen Eindampfung Granulen, die bei hohem Gehalt des Lösungsmittels gelartig und bei niedrigem Lösungsmittelgehalt relativ hart und formstabil sind. Der Flüssigkeitsgehalt der Granulen kann - abhängig von den Bedingungen der Wasserdampfdestillation - in beiden Fällen bis zu mehr als 85 % betragen. Die in den Granulen eingeschlossene Flüssigkeit enthält organische und anorganische Verunreinigungen, die bei der Extraktion der Biomasse gemeinsam mit dem Biopolymer eluiert wurden. Diese müssen vor einer Verwendung des Biopolymers für die Kunststoffherstellung weitestgehend entfernt werden.

Bei einer Wäsche der Granulen mit Wasser werden im wesentlichen nur wasserlösliche Komponenten entfernt. An Isoamylalkohol reiche Granulen zerfließen schon beim Versetzen mit nur geringen Mengen an Isoamylalkohol oder anderen organischen Lösungsmitteln sehr rasch und bilden ein Gel, das die Hauptmenge der ursprünglich vorhandenen organischen Verunreinigungen enthält. D. h. eine Wäsche mit organischen Lösungsmitteln zur Entfernung nicht wasserlöslicher Verunreinigungen ist in diesem Fall nicht möglich.

Nun hat sich überraschenderweise gezeigt, daß bei der Wasserdampfdestillation an Isoamylalkohol verarmte Granulen mit einem beliebigen Überschuß an Isoamylalkohol oder einem anderen mit Wasser nicht beliebig mischbarem Lösungsmittel in denen Polyhydroxyalkanoate nicht löslich sind (z. B. Ethylacetat) versetzt werden können, ohne daß eine Gelbildung stattfindet. Vielmehr kommt es nur zu einem geringfügigen Quellen der Granulen (bei Einsatz von Isoamylalkohol) oder auch zu einem Zerfallen der Granulen (bei Einsatz von Ethylacetat) in kleinere Partikel und zu einer fast vollständigen Verdrängung der in den Granulen enthaltenden wässrigen Phase durch das organische Lösungsmittel. Eine Gelbildung bleibt auch dann aus, wenn die Granulen (z. B. auch aufgrund des Einwirkens von Scherkräften durch einen Rührer) zu feineren, aber ebenfalls gut filtrierbaren Partikeln zerfallen.

Die wässrige Phase mit den darin enthaltenen Verunreinigungen separiert sich aufgrund der höheren Dichte und kann abgetrennt werden. Die das organische Lösemittel enthaltenden Granulen verbleiben in der organischen Phase, sedimentieren dort jedoch. Die im Inneren der Granulen enthaltenen organischen Verunreinigungen können in die organische Waschlösung übergehen und somit eluiert werden. Durch Anwendung einer Gegenstromwäsche auf die Granulen können diese Verunreinigungen um einen nahezu beliebigen Faktor abgereichert werden. Somit bewirkt die Wäsche der Granulen mit dem organischen Lösungsmittel sowohl eine Abreicherung der bevorzugt in Wasser als auch der bevorzugt im organischen Lösungsmittel löslichen Verunreinigungen.

Nach Abtrennung der Waschflüssigkeit von den Granulen können die Granulen von den im Inneren enthaltenen Resten der organischen Waschlösung durch eine Wasserdampfdestillation oder bei Einsatz eines leicht flüchtigen Lösungsmittels wie Ethylacetat auch direkt in einem Trockner von dem Lösungsmittel befreit werden.

Ausführungsbeispiele:
1. Wäsche von Granulen aus Polyhydroxyalkanoaten insbesondere von Polyhydroxy-β-Buttersäure und dessen Copolymeren mit anderen Polyhydroxyalkanoaten, die zuvor mittels einer Wasserdampfdestillation von dem Extraktionsmittel Isoamylalkohol weitgehend befreit wurden und in denen der Isoamylalkoholgehalt der Granulen unter 25 Gew.-% und bevorzugt unter 10 Gew.-% liegt, vorzugsweise durch erneute Zugabe von Isoamylalkohol als Waschflüssigkeit, wobei die in den Granulen enthaltene wässrige Phase durch Isoamylalkohol weitgehend verdrängt wird und damit in den Granulen enthaltene nicht wasserlösliche Verunreinigungen durch Isoamylalkohol eluiert werden können. Nachfolgende Abtrennung der mit Verunreinigungen beladenen Waschlösung mittels geeigneten Filtern, Zentrifugen oder ähnlichen Entwässerungsaggregaten.
2. Wäsche von Granulen aus Polyhydroxyalkanoaten insbesondere von Polyhydroxy-β-Buttersäure und dessen Copolymeren mit anderen Polyhydroxyalkanoaten, die zuvor mittels einer Wasserdampfdestillation von dem Extraktionsmittel Isoamylalkohol weitgehend befreit wurden, gemäß Beispiel 1, jedoch unter Verwendung eines anderen nicht beliebig mit Wasser mischbaren organischen Lösungsmittels ohne Löseeigenschaften für PHB wie zum Beispiel Ethylacetat. Nachfolgende Abtrennung der mit Verunreinigungen beladenen Waschlösung mittels geeigneten Filtern, Zentrifugen oder ähnlichen Entwässerungsaggregaten.
3. Wäsche von Granulen aus Polyhydroxyalkanoaten insbesondere von Polyhydroxy-β-Buttersäure und dessen Copolymeren mit anderen Polyhydroxyalkanoaten, die zuvor mittels einer Wasserdampfdestillation vom dem Extraktionsmittel Isoamylalkohol weitgehend befreit wurden, gemäß Beispiel 1 oder 2, wobei die verwendete organische Waschflüssigkeit mit Wasser gesättigt ist und darüber hinaus noch zusätzliches Wasser in die Wäsche eingebracht werden kann.
4. Wäsche von Granulen aus Polyhydroxyalkanoaten insbesondere von Polyhydroxy-β-Buttersäure und dessen Copolymeren mit anderen Polyhydroxyalkanoaten, die zuvor mittels einer Wasserdampfdestillation von dem Extraktionsmittel Isoamylalkohol weitgehend befreit wurden, gemäß Beispiels 1 bis 3, wobei die Wäsche einmalig oder nach jeweiliger Abtrennung der gewaschenen Granulen von der organischen Waschlösung und der separierten wässrigen Phase mehrfach hintereinander durchgeführt wird oder daß die Wäsche in einem Waschturm erfolgt, in dem die organische Waschlösung im Gegenstrom zu den Granulen geführt wird.
5. Wäsche von Granulen aus Polyhydroxyalkanoaten insbesondere von Polyhydroxy-β-Buttersäure und dessen Copolymeren mit anderen Polyhydroxyalkanoaten, die zuvor mittels einer Wasserdampfdestillation von dem einen organischen Extraktionsmittel Isoamylalkohol weitgehend befreit wurden, gemäß Beispiel 1 bis 4, wobei bei einer mehrmaligen Wäsche oder vor Aufgabe der Granulen auf einen Waschturm zunächst die beim erstmaligen Versetzen der Granulen mit dem organischen Waschmedium abgeschiedenen wässrigen Phase abgetrennt wird.

## Patentansprüche

1. Verfahren zur Reinigung eines Biopolymers, welches nach einer weitgehenden Entfernung des zur Extraktion aus einer Biomasse genutzten organischen Lösungsmittels mittels einer Wasserdampfdestillation als Granulen vorliegt,
**dadurch gekennzeichnet,**
**daß** Granulen mit einem Gehalt von kleiner 25 Gew.-% an organischem Lösungsmittel wenigstens einmal mit einer nicht beliebig mit Wasser mischbaren organischen Waschlösung derart behandelt werden, daß durch Verdrängen der wäßrigen Phase mittels der Waschlösung, die in Wasser löslichen Verunreinigungen, und durch Eluieren der in dem organischen Lösungsmittel löslichen Verunreinigungen in die Waschlösung, eine Abreicherung der Verunreinigungen in den Granulen bewirkt wird, wobei nachfolgend die wäßrige Phase separiert und die gewaschenen Granulen von der Waschlösung abgetrennt werden.

2. Verfahren nach Anspruch 1, **dadurch gekennzeichnet, daß** die Granulen mit einem Gehalt von kleiner 10 Gew.-% an organischem Lösungsmittel wenigstens einmal mit der organischen Waschlösung behandelt werden.

3. Verfahren nach Anspruch 1 und 2, **dadurch gekennzeichnet, daß** bevorzugt formstabile Granulen behandelt werden.

4. Verfahren nach einem der Ansprüche 1 bis 3, **dadurch gekennzeichnet, daß** das zur Extraktion verwendete organische Lösungsmittel Isoamylalkohol ist.

5. Verfahren nach einem der Ansprüche 1 bis 4, **dadurch gekennzeichnet, daß** das Biopolymer vorzugsweise Polyhydroxyalkanoate sind, und es sich unter diesen vorzugsweise um Polyhydroxy-β-Buttersäure sowie deren Copolymere mit anderen Polyhydroxyalkanoaten handelt.

6. Verfahren nach einem der Ansprüche 1 bis 5, **dadurch gekennzeichnet, daß** als Waschlösung ein organisches Lösungsmittel ohne beziehungsweise mit schlechten Löseeigenschaften für das Biopolymer verwendet wird.

7. Verfahren nach einem der Ansprüche 1 bis 6, **dadurch gekennzeichnet, daß** als Waschlösung Isoamylalkohol oder ein anderes ebenfalls mit Wasser nicht beliebig mischbares, organisches Lösungsmittel verwendet wird.

8. Verfahren nach einem der Ansprüche 1 bis 7, **dadurch gekennzeichnet, daß** als Waschlösung Isoamylalkohol oder Ethylacetat verwendet wird.

9. Verfahren nach einem der Ansprüche 1 bis 8, **dadurch gekennzeichnet, daß** die Waschlösung mit Wasser gesättigt ist.

10. Verfahren nach einem der Ansprüche 1 bis 9, **dadurch gekennzeichnet, daß** zusätzliches Wasser in das Verfahren eingebracht wird.

11. Verfahren nach einem der Ansprüche 1 bis 10, **dadurch gekennzeichnet, daß** die Abtrennung der mit den Verunreinigungen beladenen Waschlösung durch Schwerkraftabscheidung oder mittels geeigneten Filtern, Zentrifugen und/oder ähnlichen Entwässerungsaggregaten erfolgt.

12. Verfahren nach einem der Ansprüche 1 bis 11, **dadurch gekennzeichnet, daß** die gereinigten Granulen zur mehrfachen Reinigung nach der jeweiligen Abtrennung der mit den Verunreinigungen beladenen Waschlösung erneut mit organischer Waschlösung versetzt und gereinigt werden.

13. Verfahren nach einem der Ansprüche 1 bis 11, **dadurch gekennzeichnet, daß** bei der mehrfachen Reinigung die Granulen und die Waschlösung im Gegenstrom geführt werden.

14. Verfahren nach einem der Ansprüche 1 bis 11 und nach Anspruch 13, **dadurch gekennzeichnet, daß** diese Gegenstromwäsche der Granulen in einem Waschturm durchgeführt wird.

15. Verfahren nach einem der Ansprüche 1 bis 14, **dadurch gekennzeichnet, daß** die aus den Granulen zu Beginn abgeschiedene wäßrige Lösung vor der Durchführung nachfolgender Waschschritte abgetrennt wird.
